(19) Europäisches Patentamt
European Patent Office
Office européen des brevets

(11) EP 2 444 988 A1

(12) **EUROPÄISCHE PATENTANMELDUNG**

(43) Veröffentlichungstag:
25.04.2012 Patentblatt 2012/17

(51) Int Cl.:
*H01H 33/34* [(2006.01)]     *F16F 1/12* [(2006.01)]
*F15B 15/14* [(2006.01)]

(21) Anmeldenummer: 11008092.6

(22) Anmeldetag: 06.10.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 22.10.2010 DE 102010049137

(71) Anmelder: ABB Technology AG
8050 Zürich (CH)

(72) Erfinder: Körber, Franz-Josef
63674 Altenstadt (DE)

(74) Vertreter: Partner, Lothar et al
ABB AG
GF IP
Wallstadter Straße 59
68526 Ladenburg (DE)

(54) **Federspeicherantrieb sowie Hochspannungsleistungsschalter**

(57) Die Erfindung betrifft eine hydromechanische Federspeicheranordnung umfassend:
- eine Federeinrichtung (3);
- einen Kolben (8) eines Druckzylinders (16);

wobei die Federeinrichtung (3) und der Kolben (8) durch ein Getriebe (1) mit variabler Übersetzung gekoppelt sind, um einen Federhub der Federeinrichtung (3) in einen Kolbenhub umzusetzen, wobei die Übersetzung von einer Auslenkung der Federeinrichtung (3).

Fig. 1

EP 2 444 988 A1

**Beschreibung**

Die Erfindung betrifft hydromechanische Federspeicherantriebe zur Betätigung von Hochspannungsleistungsschaltern. Insbesondere betrifft die Erfindung Maßnahmen zur Linearisierung von Federkennlinien von Federn, insbesondere von Schraubenfedern, die in einem hydromechanischen Federspeicherantrieb einen Speicherkolben beaufschlagen.

Hydromechanische Federspeicherantriebe sind zum Betätigen von Hochspannungsleistungsschaltern aus dem Stand der Technik bekannt.

Bei mechanischen Federspeicherantrieben ist die Speicherung der Einschaltung und Ausschaltung in jeweils einer eigenen Feder realisiert. Hierbei wird die Einschaltfeder über ein mechanisches, stark untersetzendes Getriebe gespannt und spannt bei einem Einschalten über eine Kurvenscheibe die Ausschaltfeder. Diese mechanischen Federspeicherantriebe haben den Nachteil, dass die Federn aufeinander abgestimmt sein müssen und die Einschaltfeder den Energiegehalt für die von ihr zu spannende Ausschaltfeder beinhalten muss.

Dagegen offenbart die Druckschrift WO 2009/086 906 A1 einen hydromechanischen Federspeicherantrieb, wobei ein Arbeitszylinder, der mit einem Stromkreisunterbrecher gekoppelt ist, je nach Stellung eines Steuerventils mit einer Druckleitung oder einer Tankleitung verbunden wird. Die Druckleitung ist mit einem Druckzylinder verbunden, der ein Fluid in der Druckleitung unter einem permanenten Druck hält. Der Druckzylinder enthält einen Druckkolben, der durch eine vorbelastete Speicherfeder beaufschlagt ist. Durch Öffnen des Steuerventils kann das in dem Druckzylinder befindliche Fluid in den Arbeitszylinder strömen, wodurch ein Stromkreisunterbrecher betätigt wird.

Die Speicherfeder ist in der Regel als Schraubenfeder oder als Tellerfeder ausgeführt und weist in der Praxis eine nicht lineare Federkennlinie auf, so dass der Druckkolben des Speicherzylinders je nach seiner Auslenkung mit einer unterschiedlichen Kraft beaufschlagt wird.

Für hydromechanische Federspeicherantriebe ist es jedoch wünschenswert, dass die auf den Druckkolben des Speicherzylinders wirkende Federkraft möglichst konstant ist oder sich nur gemäß einer sehr flachen Federkonstante ändert, wobei eine relativ hohe Vorspannung erforderlich ist.

Dies kann bei herkömmlichen Schrauben- oder Tellerfedern nur durch Auswahl eines sehr kleinen Bereichs der Federkennlinie realisiert werden, so dass ein Großteil der gespeicherten Energie im Auslösefall nicht abgerufen werden kann.

Es ist daher Aufgabe der vorliegenden Erfindung, eine Maßnahme zur Verfügung zu stellen, um bei Verwendung einer Federvorrichtung mit nicht konstanter Federkraft zum Beaufschlagen eines Druckkolbens eines Speicherzylinders einen hohen Anteil der in der Feder gespeicherten Federenergie zu nutzen und dabei eine möglichst konstante Kraft auf den Druckkolben auszuüben.

Diese Aufgabe wird durch die Federspeicheranordnung gemäß Anspruch 1 sowie durch den Hochspannungsleistungsschalter gemäß dem nebengeordneten Anspruch gelöst.

Vorteilhafte Ausgestaltungen sind in den abhängigen Ansprüchen angegeben.

Gemäß einem ersten Aspekt ist eine hydromechanische Federspeicheranordnung vorgesehen. Die Federspeicheranordnung umfasst eine Federeinrichtung und einen Kolben eines Druckzylinders, wobei die Federeinrichtung und der Kolben durch ein Getriebe mit variabler Übersetzung gekoppelt sind, um einen Federhub der Federeinrichtung in einen Kolbenhub umzusetzen, wobei die Übersetzung von einer Auslenkung der Federeinrichtung und/oder von einer Auslenkung des Kolbens abhängt.

Eine Idee der vorliegenden Erfindung besteht darin, die von einer Schrauben- oder Tellerfeder bereitgestellte nicht konstante Federkraft mithilfe eines Linearisierungsgetriebes zu linearisieren, um einen größeren Anteil der in der Feder gespeicherten Energie zu nutzen. Das Linearisierungsgetriebe ist dazu mit einem Gestänge versehen, das ein aus vier Stabverbindungen aufgebautes Parallelogramm aufweist.

Weiterhin kann die Federeinrichtung ausgebildet sein, um eine von der Auslenkung abhängige Federkraft in Richtung des Kolbens auszuüben, wobei der Kolben in einer Richtung in dem Druckzylinder bewegbar ist, die der Richtung der Auslenkung der Federeinrichtung entspricht.

Die Federeinrichtung kann eine Federkraft bereitstellen, die mit zunehmender Auslenkung der Federeinrichtung in einer von dem Kolben weg weisenden Richtung steigt.

Gemäß einer Ausführungsform kann das Getriebe als Viergelenkgetriebe ausgebildet sein und zwischen einer Anlagefläche des Kolbens und einer Auflagefläche an der Federeinrichtung angeordnet sein.

Weiterhin kann das Viergelenkgetriebe vier Schenkel aufweisen, die an ihren Enden über Drehgelenke miteinander verbunden sind, so dass ein Viereck gebildet wird, wobei ein erstes der Drehgelenke an der Anlagefläche des Kolbens, ein zweites der Drehgelenke, das dem ersten Drehgelenk gegenüberliegt, an der Auflagefläche der Federeinrichtung, und ein drittes sowie ein dazu gegenüberliegendes viertes der Drehgelenke an bezüglich des Kolbens und der Federeinrichtung festgelegten Gleitbereichen anliegen.

Insbesondere können die Gleitbereiche an einer Innenwand eines zylindrischen Getriebegehäuses, insbesondere eines Abschnitts eines Federrohrs, in dem die Federeinrichtung angeordnet ist, vorgesehen sein.

Die Gleitbereiche können Teilbereiche aufweisen, die bezüglich der Richtung der Auslenkung der Federeinrichtung geneigt sind, so dass bei Verschieben des Vierecks der Abstand zwischen dem dritten und dem vierten Drehgelenk variiert.

Insbesondere kann vorgesehen sein, dass sich der zwischen den Teilbereichen definierte Bereich in Richtung des Kolbens aufweitet.

Dabei kann die Aufweitung so sein, dass die variable Übersetzung zu einer Umsetzung einer Federkraft der Federeinrichtung zu einer Kolbenkraft auf den Kolben des Druckzylinders so variiert, dass die Kolbenkraft zumindest abschnittsweise konstant ist.

Insbesondere kann die Aufweitung einen linearen Verlauf haben.

Die Enden der Schenkel des Viergelenkgetriebes können abgerundet sein, um ein Gleiten in den Gleitbereichen zu ermöglichen.

Gemäß einem weiteren Aspekt ist ein Hochspannungsleistungsschalter mit einem Speicherzylinder als Druckzylinder vorgesehen, der mit der obigen Federspeicheranordnung versehen ist.

Bevorzugte Ausführungsformen der vorliegenden Erfindung werden nachfolgend anhand der beigefügten Zeichnungen näher erläutert. Es zeigen:

Figur 1    eine schematische Darstellung eines hydraulischen Federspeicherantriebs mit einem Viergelenkgetriebe zur Linearisierung einer Federkennlinie;

Figur 2    ein Diagramm zur Veranschaulichung der Federkraft, der Kolbenkraft und der notwendigen Übersetzung, um eine konstante Kolbenkraft zu bewirken.

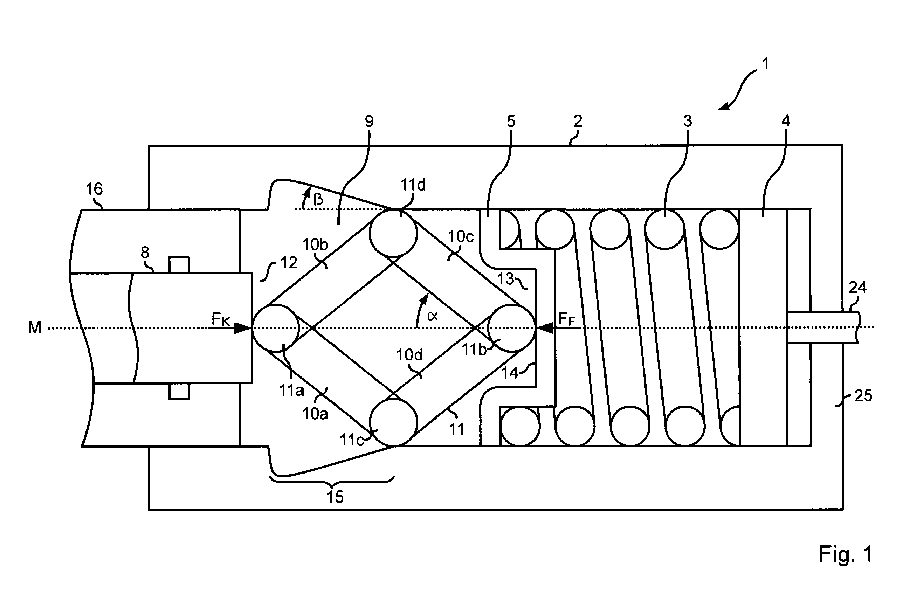

In Figur 1 ist ein hydraulischer Federspeicherantrieb 1 dargestellt, bei dem eine Feder mechanische Energie zum Betätigen eines Speicherkolbens bereitstellt.

Der Federspeicherantrieb 1 weist ein zylindrisches Federrohr 2 auf, in dem eine Spiralfeder 3 als Federeinrichtung angeordnet ist. Die Spiralfeder 3 ist zwischen einer statischen Federplatte 4 und einer beweglichen Federplatte 5, insbesondere mit einer Vorspannung, in axialer Richtung (entlang einer Mittenachse M) des Federrohrs 2 angeordnet. Anstelle der Spiralfeder können auch andere Federarten verwendet werden, wie z. B. eine Tellerfeder.

Weiterhin kann die Spiralfeder 3 mit einem Durchmesser vorgesehen sein, der im Wesentlichen dem Innendurchmesser des zylindrischen Federrohrs 2 entspricht. Die statische Federplatte 4 kann mit einer Justiereinrichtung 24 verbunden sein, um den Federspeicherantrieb 1 durch Vorgeben der axialen Position der statischen Federplatte 4 zu justieren. Dazu kann die Justiereinrichtung 24 ein mit einem Schraubgewinde versehenen Stift vorsehen, der in eine Öffnung an einer Stirnseite 25 des Federrohrs 2 mit einem Innengewinde eingesetzt ist, so dass durch Drehen der statischen Federplatte 4 diese in axialer Richtung verstellt werden kann.

An einem der Stirnseite 25 gegenüber liegendem Ende des hydromechanischen Federspeicherantriebs 1 ist ein Speicherzylinder 16 angeordnet. Der Speicherzylinder 16 weist einen in axialer Richtung beweglichen Speicherkolben 8 auf. Der Speicherzylinder 16 dient dazu, einen Speicherdruck eines Hydraulikmediums permanent zur Verfügung zu stellen.

Zwischen der beweglichen Federplatte 5 und dem Speicherkolben 8 ist ein Viergelenkgetriebe 9 angeordnet. Das Viergelenkgetriebe 9 weist vier Schenkel 10 gleicher Länge, einen ersten bis vierten Schenkel 10a-10d auf, die zu einem Trapez miteinander verbunden sind. Jeder der Schenkel 10 ist dazu an seinen Endpunkten über ein entsprechendes Drehgelenk 11, ein erstes bis viertes Drehgelenk 11a-11d, mit jeweils zwei weiteren der Schenkel 10 verbunden, so dass diese ein um die Drehgelenke 11 verformbares Viereck ausbilden. Die Drehgelenke 11 und insbesondere die daran angebrachten Enden der jeweiligen Schenkel 10 sind abgerundet, so dass ein Gleiten der Drehgelenke 11 auf einer Fläche möglich ist. Alternativ können zumindest das dritte und das vierte Drehgelenk 11c und 11d mit einer Rolle versehen sein, um anstelle eines Gleitens ein Abrollen zu ermöglichen.

Das Viergelenkgetriebe 9 ist so zwischen dem Speicherkolben 8 und der beweglichen Federplatte 5 angeordnet, dass dieses mit einem ersten der Drehgelenke 11a an einer Anlagefläche 12 des Speicherkolbens 8 anliegt. Das bezüglich der viereckigen Anordnung der Schenkel 10 gegenüber liegende zweite Drehgelenk 11b liegt an einer der Spiralfeder 3 gegenüber liegenden Seite der beweglichen Federplatte 5 an.

Die bewegliche Federplatte 5 weist dazu vorzugsweise eine flächige Erstreckung auf, die dem Querschnitt des Federrohrs 2 entspricht. Die bewegliche Federplatte 5 weist weiterhin eine mittige Vertiefung 13 auf, die in den von der Spiralfeder 3 umschlossenen Bereich hineinragt. Auf der Bodenfläche der Vertiefung 13, die als Auflagefläche 14 dient, sitzt das zweite Drehgelenk 11 b des Viergelenkgetriebes 9 auf.

Weiterhin weist das Viergelenkgetriebe 9 ein drittes Drehgelenk 11 c und ein viertes Drehgelenk 11d auf, die einander gegenüber liegen und an einer Innenfläche des Federrohrs 2 anliegen. Das dritte und das vierte Drehgelenk 11a-11d liegen jeweils in einem Gleitbereich des Federrohrs 2 zwischen der Spiralfeder 3 und der Anschlagfläche 12 des Speicherkolbens 8 an und gleiten je nach Auslenkung des Speicherkolbens an diesem entlang. Der Gleitbereich ist vollständig oder in einem Teilbereich 15 schräg zum Verlauf einer Mittenachse M angeordnet, so dass sich der Abstand der Teilbereiche 15 der Gleitbereiche, die eine Gleitstrecke (oder Abrollstrecke) für das dritte und das vierte Drehgelenk 11c, 11d bilden, in Richtung zur Anschlagfläche 12 des Speicherkolbens 8 aufweitet. Die Aufweitung in dem Teilbereich 15 kann bezüglich der axialen Richtung linear oder entsprechend einem sonstigen monotonen Verlauf erfolgen.

Bei einer Bewegung des Speicherkolbens 8, beispielsweise bewirkt durch einen Druckabfall im Speicherzylinder 16, bewegt sich das Viergelenkgetriebe 9 im Inneren des Federrohrs 2. Dabei bewegen sich die Drehgelenke 11 entlang der axialen Richtung, wobei das erste und zweite Drehgelenk 11a, 11 b von der axialen Richtung nicht ausgelenkt werden. Dagegen werden bei der Bewegung das dritte und das vierte Drehgelenk 11 c, 11 d durch die Klemmkraft zwischen der Anschlagfläche 12 des Speicherkolbens 8 und der Auflagefläche 14 der beweglichen Federplatte 5 nach außen gedrückt, so dass das dritte und vierte Drehgelenk 11c, 11d während der gesamten Bewegung in dem Teilbereich 15 an der Innenfläche des Federrohrs 2 anliegen. Je nach Auslenkung des Speicherkolbens 8 befinden sich das dritte und das vierte Drehgelenk 11 c, 11 d an einer entsprechenden axialen Position, so dass der Abstand zwischen dem dritten und dem vierten Drehgelenk 11c, 11d quer zur axialen Richtung von der Auslenkung des Speicherkolbens 8 abhängt.

Die Anordnung des Viergelenkgetriebes 9 in einem Federrohr 2 mit von der axialen Richtung abweichenden Verläufen des Teilbereichs 15 der Innenfläche, auf dem sich bei einer Auslenkung des Speicherkolbens 8 das dritte und das vierte Drehgelenk 11 c, 11 d bewegen, führt dazu, dass eine Auslenkung der beweglichen Federplatte 5 einer davon abweichenden Auslenkung des Speicherkolbens 8 gegenüber steht. Dies bedeutet, dass das Viergelenkgetriebe 9 ein Übersetzungsverhältnis Ü aufweist, wobei das Übersetzungsverhältnis Ü von der Neigung (Gradient) der Teilbereiche 15 an dem Ort abhängt, an dem sich das dritte und das vierte Drehgelenk 11 c, 11 d momentan befinden.

Es ist wünschenswert, wie eingangs beschrieben, die Kraft auf den Speicherkolben 8 unabhängig von seiner Auslenkung einzustellen. Dies ist durch direktes Koppeln mit einer Spiralfeder 3 nicht möglich, da eine Spiralfeder 3 eine von ihrer Auslenkung abhängige Kraft ausübt.

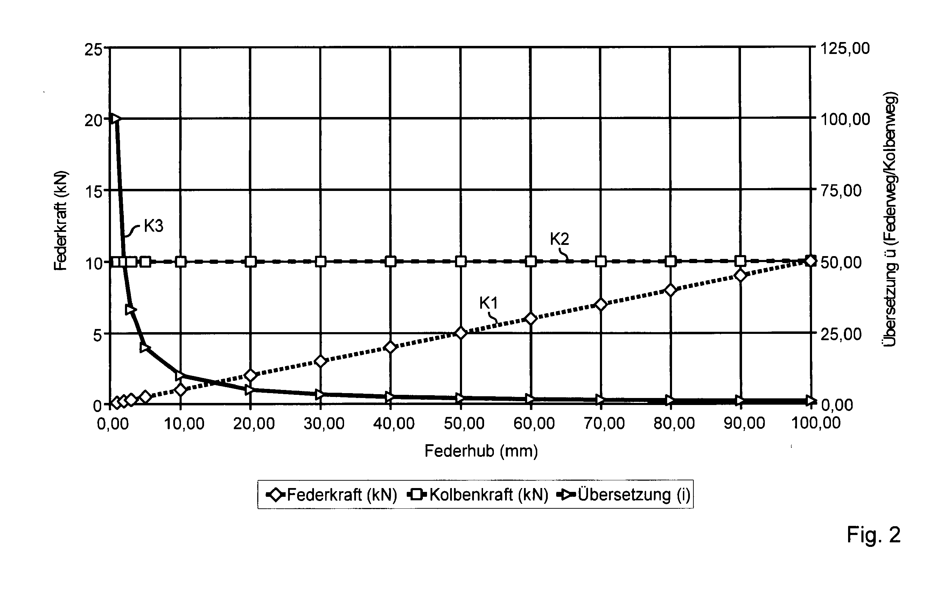

Figur 2 zeigt eine schematische Darstellung der ausgeübten Federkraft (Kurve K1), der im Idealfall konstant verlaufenden Kolbenkraft $F_K$ (Kurve K2), d. h. der Kraft, die auf den Speicherkolben ausgeübt wird, und der benötigten Übersetzung Ü des Viergelenkgetriebes 9, um aus der Federkraft $F_F$ eine entsprechende Kolbenkraft $F_K$ zu generieren (Kurve K3). Man erkennt, dass das Übersetzungsverhältnis Ü, das durch die Kurve K3 dargestellt ist, im Wesentlichen einen hyperbolischen Verlauf aufweist.

Somit ist es wünschenswert, die Neigung der Teilbereiche 15 der Innenfläche so zu wählen, dass das hyperbolische Übersetzungsverhältnis Ü bezüglich der Auslenkung der Spiralfeder 3 erreicht wird bzw. sich diesem angenähert wird. Aus Gründen der einfacheren Herstellung eines derartigen Viergelenkgetriebes 9 wird vorzugsweise vorgesehen, die Aufweitung der Innenfläche des Federrohrs 2 gemäß einer linearen Schrägung vorzusehen. In diesem Fall gilt, dass das Übersetzungsverhältnis Ü umso größer ist, je weiter sich die Spiralfeder 3 im entspannten Bereich befindet. Das Übersetzungsverhältnis Ü entspricht dem Verhältnis des Federwegs der Feder zur Auslenkung des Speicherkolbens 8. Dies bedeutet beispielsweise, dass, wenn die Spiralfeder 3 eine Federkraft bewirkt, die 1/10 der benötigten Kolbenkraft entspricht, das Übersetzungsverhältnis 10 entsprechen müsste, d. h. einem Federhub um eine bestimmte Strecke steht ein Kolbenhub um 1/10 des Federhubs entgegen. Diese Abhängigkeit zwischen dem Federhub, dem Kolbenhub und der Federkraft bzw. der Kolbenkraft ist durch den Energieerhaltungssatz vorgegeben.

Mit Bezug auf Figur 1 ist ein Viergelenkwinkel α definiert, der die Erstreckung (Linie zwischen dem zweiten Drehgelenk 11 b und dem dritten bzw. vierten Drehgelenk 11 c, 11d) des dritten bzw. des vierten Schenkels 10c, 10d bezüglich der Mittenachse M angibt, und ein Neigungswinkel β, der die lineare Schrägung des Verlaufs des Teilbereichs 15 bezüglich der Mittenachse M angibt. Die momentanen Winkel α und β bestimmen im Wesentlichen das Übersetzungsverhältnis Ü bei einer bestimmten Auslenkung der Spiralfeder 3. Während der Neigungswinkel β im vorliegenden Fall als konstant angenommen wird, variiert der Viergelenkwinkel α abhängig von der Auslenkung der Spiralfeder 3. Der Winkel α bestimmt somit maßgeblich das Übersetzungsverhältnis Ü, wobei gilt:

$$\ddot{U} \sim 1 - \frac{tan\beta}{tan\alpha}$$

Mit anderen Worten: α wird umso größer, je weiter die Feder entspannt ist, wodurch sich das Übersetzungsverhältnis Ü bezüglich der Auslenkungen der beweglichen Federplatte 5 und des Speicherkolbens 8 entsprechend vergrößert. Bezüglich der Kräfte gilt das Entsprechende. Je größer der Viergelenkwinkel α wird, desto mehr dreht sich die Wirkrichtung der Kraft quer zur axialen Richtung. Die Getriebeübersetzung Ü wird hierdurch wie gewünscht kontinuierlich verändert.

Auch bei Vermeidung zu großer Kräfte im Viergelenkgetriebe 9 ist es durch diese Ausgestaltung möglich, mindestens 50% des Hubs der Spiralfeder 3 zu linearisieren und damit 75% der in der Feder gespeicherten Energie zu nutzen.

Die Teilbereiche 15 mit der Aufweitung des Stellwegs des dritten und des vierten Drehgelenks 11c, 11d sind vorzugsweise an der Innenwand des Federrohrs 2 vorgesehen. Alternativ kann das Federrohr 2 auch mit zwei Schlitzen versehen sein, durch die die Drehgelenke 11c, 11d hinaus ragen bzw. durch die die Schenkel 10a-10d hinaus verlängert sind, und die Gleitbereiche bzw. Abrollbereiche mit der entsprechenden Neigung können außerhalb des Federrohrs 2 vorgesehen sein.

## BEZUGSZEICHENLISTE

| | |
|---|---|
| 1 | Viergelenkgetriebe |
| 2 | Federrohr |
| 3 | Spiralfeder |
| 4 | statische Federplatte |
| 5 | bewegliche Federplatte |
| 8 | Speicherkolben |
| 9 | Viergelenkanordnung |
| 10a, 10b, 10c, 10d | Schenkel |
| 11a, 11b, 11c, 11d | erstes bis viertes Drehgelenk |
| 12 | Anschlagfläche |
| 13 | Vertiefung |
| 14 | Auflagefläche |
| 15 | Teilbereich |
| 16 | Speicherzylinder |
| 24 | Justiereinrichtung |
| 25 | Stirnseite |

## Patentansprüche

1. Hydromechanische Federspeicheranordnung umfassend:

   - eine Federeinrichtung (3);
   - einen Kolben (8) eines Druckzylinders (16);

   **dadurch gekennzeichnet, dass**
   die Federeinrichtung (3) und der Kolben (8) durch ein Getriebe (1) mit variabler Übersetzung gekoppelt sind, um einen Federhub der Federeinrichtung (3) in einen Kolbenhub umzusetzen, wobei die Übersetzung von einer Auslenkung der Federeinrichtung (3) und/oder von einer Auslenkung des Kolbens (8) abhängt.

2. Federspeicheranordnung nach Anspruch 1, wobei die Federeinrichtung (3) ausgebildet ist, um eine von der Auslenkung abhängige Federkraft in Richtung des Kolbens (8) auszuüben, und wobei der Kolben (8) in einer Richtung in dem Druckzylinder (16) bewegbar ist, die der Richtung der Auslenkung der Federeinrichtung (3) entspricht.

3. Federspeicheranordnung nach Anspruch 1 oder 2, wobei die Federeinrichtung (3) eine Federkraft bereitstellt, die mit zunehmender Auslenkung der Federeinrichtung (3) in einer von dem Kolben (8) weg weisenden Richtung steigt.

4. Federspeicheranordnung nach einem der Ansprüche 1 bis 3, wobei das Getriebe (1) als Viergelenkgetriebe ausgebildet ist und zwischen einer Anlagefläche des Kolbens (8) und einer Auflagefläche an der Federeinrichtung (3) angeordnet ist.

5. Federspeicheranordnung nach Anspruch 4, wobei das Viergelenkgetriebe (1) vier Schenkel (10a, 10b, 10c, 10d) aufweist, die miteinander an ihren Enden über Drehgelenke (11a, 11b, 11c, 11d) verbunden sind, so dass ein Viereck gebildet wird, wobei ein erstes der Drehgelenke (11a, 11 b, 11 c, 11 d) an der Anlagefläche des Kolbens (8), ein zweites der Drehgelenke (11 b), das dem ersten Drehgelenk (11a) gegenüber liegt, an der Auflagefläche der Federeinrichtung (3) und ein drittes (11 c) und ein dazu gegenüberliegendes viertes (11d) der Drehgelenke an bezüglich des Kolbens (8) und der Federeinrichtung (3) festgelegten Gleitbereichen anliegen.

6. Federspeicheranordnung nach Anspruch 5, wobei die Gleitbereiche an einer Innenwand eines zylindrischen Getriebegehäuses, insbesondere eines Abschnitts eines Federrohrs (2), in dem die Federeinrichtung (3) angeordnet ist, vorgesehen sind.

7. Federspeicheranordnung nach Anspruch 5 oder 6, wobei die Gleitbereiche Teilbereiche (15) aufweisen, die bezüglich der Richtung der Auslenkung der Federeinrichtung (3) geneigt sind, so dass bei Verschieben des Vierecks der Abstand zwischen dem dritten und dem vierten Drehgelenk (11c, 11d) variiert.

8. Federspeicheranordnung nach Anspruch 7, wobei sich der zwischen den Teilbereichen (15) eingeschlossene Bereich in Richtung des Kolbens (8) aufweitet.

9. Federspeicheranordnung nach Anspruch 8, wobei die Aufweitung so erfolgt, dass die variable Übersetzung zu einer Umsetzung einer Federkraft der Federeinrichtung (3) zu einer Kolbenkraft auf den Kolben (8) des Druckzylinders so variiert, dass die Kolbenkraft zumindest abschnittsweise konstant ist.

10. Federspeicheranordnung nach Anspruch 8, wobei die Aufweitung linear ist.

11. Federspeicheranordnung nach einem der Ansprüche 5 bis 10, wobei die Enden der Schenkel (10a, 10b, 10c, 10d) des Viergelenkgetriebes (1) abgerundet sind, um ein Gleiten in den Gleitbereichen zu ermöglichen.

12. Hochspannungsleistungsschalter mit einem Speicherzylinder als Druckzylinder, der mit der Federspeicheranordnung nach einem der Ansprüche 1 bis 11 versehen ist.

Fig. 1

7

Fig. 2

EP 2 444 988 A1

Europäisches Patentamt
European Patent Office
Office européen des brevets

## EUROPÄISCHER RECHERCHENBERICHT

Nummer der Anmeldung

EP 11 00 8092

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2009/086906 A1 (ABB TECHNOLOGY AG [CH]; KOERBER FRANZ-JOSEF [DE]) 16. Juli 2009 (2009-07-16) * Seite 6, Absatz 7; Abbildung 1 * ----- | 1-12 | INV. H01H33/34 F16F1/12 F15B15/14 |
| Y | US 4 343 460 A (GENDE JOSEPH J) 10. August 1982 (1982-08-10) * Spalte 1, Zeile 25 - Zeile 48; Abbildungen 1-3 * * Spalte 2, Zeile 6 - Zeile 62 * ----- | 1-12 | |
| Y | DE 91 11 861 U1 (ABB PATENT GMBH) 14. November 1991 (1991-11-14) * Seite 4, Absatz 3; Abbildung 1 * ----- | 1-12 | |

| | | | RECHERCHIERTE SACHGEBIETE (IPC) |
|---|---|---|---|
| | | | H01H F16F F15B |

Der vorliegende Recherchenbericht wurde für alle Patentansprüche erstellt

| Recherchenort | Abschlußdatum der Recherche | Prüfer |
|---|---|---|
| München | 7. Februar 2012 | Dobbs, Harvey |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 11 00 8092

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-02-2012

| Im Recherchenbericht angeführtes Patentdokument | Datum der Veröffentlichung | Mitglied(er) der Patentfamilie | Datum der Veröffentlichung |
|---|---|---|---|
| WO 2009086906 A1 | 16-07-2009 | DE 102008004063 A1<br>WO 2009086906 A1 | 16-07-2009<br>16-07-2009 |
| US 4343460 A | 10-08-1982 | KEINE | |
| DE 9111861 U1 | 14-11-1991 | DE 9111861 U1<br>JP 5298968 A | 14-11-1991<br>12-11-1993 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009086906 A1